# FASCICULE DE BREVET EUROPEEN

(11) **EP 1 166 414 B1**
(45) Date de publication et mention de la délivrance du brevet: **15.01.2003**
(21) Numéro de dépôt: 00910957.0
(22) Date de dépôt: 16.03.2000
(51) Int. Cl.: H02G 1/14, H02G 15/18

(54) **DISPOSITIF SUPPORT POUR UN MANCHON ELASTIQUE**
VORRICHTUNG ZUM TRAGEN EINER ELASTISCHEN MUFFE
SUPPORT DEVICE FOR AN ELASTIC SLEEVE

(30) Priorité: 23.03.1999 FR 9903587
(43) Date de publication de la demande: 02.01.2002
(73) Titulaire: SAGEM SA, 75116 Paris (FR)
(72) Inventeur: VINCENS DE TAPOL, Olivier, F-75015 Paris (FR)
(74) Mandataire: Fruchard, Guy
(86) Numéro de dépôt international: FR0000633
(87) Numéro de publication internationale: WO00057524

(56) Documents cités:
- EP-A- 0 631 357
- EP-A- 0 797 281
- FR-A- 2 503 476
- FR-A- 2 592 825

## Description

La présente invention concerne un dispositif support pour un manchon élastique, notamment pour la pose d'un manchon de protection élastique sur une extrémité de câble ou sur une jonction de câbles.

On sait que lors de la préparation d'une extrémité de câble ou la réalisation d'une jonction de câbles on procède à la mise en place de différents matériaux destinés à réaliser une structure réduisant les contraintes électriques. La protection de la structure obtenue, et dans certains cas la réalisation de certaines couches de cette structure, est obtenue par la pose d'un manchon destiné à recouvrir l'extrémité de câble ou la jonction de câbles. Lorsque l'on utilise un manchon élastique, l'extension du manchon est réalisée en atelier et le manchon dans son état expansé est disposé sur un support et stocké dans l'état expansé.

Afin de permettre une extraction aisée du support pour permettre une rétraction du manchon lors de la pose de celui-ci, on connaît du document FR-A-2 503 476, qui représente l'état de la technique le plus proche, un dispositif support comprenant un organe tubulaire rigide recouvert d'un film souple à faible coefficient de frottement dont une partie est repliée à l'intérieur de l'organe tubulaire et est fixée à un axe porté par l'organe tubulaire et relié à une manivelle. En atelier le manchon élastique est mis dans un état expansé et est positionné sur le film souple.

Lors de la pose du manchon élastique sur un article à protéger, la manoeuvre de la manivelle provoque un enroulement du film sur l'axe, ce qui a pour conséquence de provoquer un glissement du film souple sur l'organe tubulaire. Le manchon élastique est entraîné en translation par le film souple et la partie de manchon s'étendant en porte à faux par rapport à l'organe tubulaire se rétracte au fur et à mesure du retrait de l'organe tubulaire. On remarquera que dans ce dispositif l'axe d'enroulement du film souple s'étend diamétralement à l'organe tubulaire rigide de sorte que ce dispositif ne peut pas être utilisé pour une jonction de câbles électriques, les câbles constituant la jonction devant déboucher aux deux extrémités de l'organe tubulaire. En outre, la manoeuvre de la manivelle implique un effort difficilement compatible avec le maintien de l'ensemble dans une position précise par rapport à l'extrémité de câble à recouvrir.

Selon l'invention on propose un dispositif support pour un manchon élastique, le dispositif support comportant un organe tubulaire rigide recouvert d'un film souple à faible coefficient de frottement ayant une première extrémité s'étendant à l'extérieur de l'organe tubulaire et une seconde extrémité s'étendant à l'intérieur de l'organe tubulaire et étant reliée à un organe d'entraînement comportant au moins un organe élastique fixé à la seconde extrémité du film souple et à l'organe tubulaire en un point de celui-ci assurant une mise en tension de l'organe élastique. Ainsi, le coulissement du film souple par rapport à l'organe tubulaire est assisté par l'effort de traction de l'organe élastique de sorte qu'il suffit d'une faible traction manuelle sur l'organe tubulaire pour provoquer le coulissement du manchon élastique. Il est donc possible d'exercer cette traction manuelle d'une main tandis que de l'autre main l'ensemble est maintenu en place de façon précise par rapport à l'extrémité de câble ou la jonction de câbles à recouvrir.

Selon une version avantageuse de l'invention, la première extrémité est fixée de façon provisoire par rapport à l'organe tubulaire. Pendant le stockage on évite ainsi tout coulissement intempestif du film souple par rapport à l'organe tubulaire sous l'effet de l'organe d'entraînement élastique.

Selon un mode de réalisation préféré de l'invention l'organe d'entraînement comporte au moins une boucle élastique fixée à la seconde extrémité du film souple. De préférence, le film souple comporte une patte repliée à l'intérieur de la boucle élastique et fixée sur elle-même par soudage ou collage.

Selon un autre aspect avantageux de l'invention, le film souple comporte au moins deux bandes se chevauchant. De préférence chaque bande comporte un premier bord longitudinal chevauchant un bord longitudinal correspondant d'une bande adjacente, et un deuxième bord longitudinal chevauché par l'autre bord longitudinal correspondant de la bande adjacente. On minimise ainsi l'effort nécessaire pour faire coulisser le film souple par rapport à l'organe tubulaire.

D'autres caractéristiques et avantages de l'invention apparaîtront à la lecture de la description qui suit d'un mode de réalisation particulier non limitatif de l'invention, en référence aux figures ci-jointes parmi lesquelles :
- la figure 1 est une vue en perspective éclatée du dispositif support selon l'invention sur lequel est disposé un manchon élastique dans un état expansé,
- la figure 2 est une vue en coupe selon le plan II-II de la figure 1,
- la figure 3 est une vue en élévation d'une bande de film souple avant sa mise en place sur l'organe tubulaire rigide.

En référence aux figures, le dispositif support selon l'invention est destiné à supporter un manchon élastique 1 dans un état expansé. Le dispositif support comporte un organe tubulaire rigide 2, par exemple un tube en polychlorure de vinyle, ayant une forme générale conique. L'organe tubulaire 2 est recouvert d'un film souple à faible coefficient de frottement 3, par exemple un film en polyéthylène téréphtalate d'une épaisseur de 50µm. Dans le mode de réalisation particulier illustré, le film souple 3 est constitué de deux bandes portant la référence numérique générale 4 et les références numériques particulières 4.1 et 4.2.

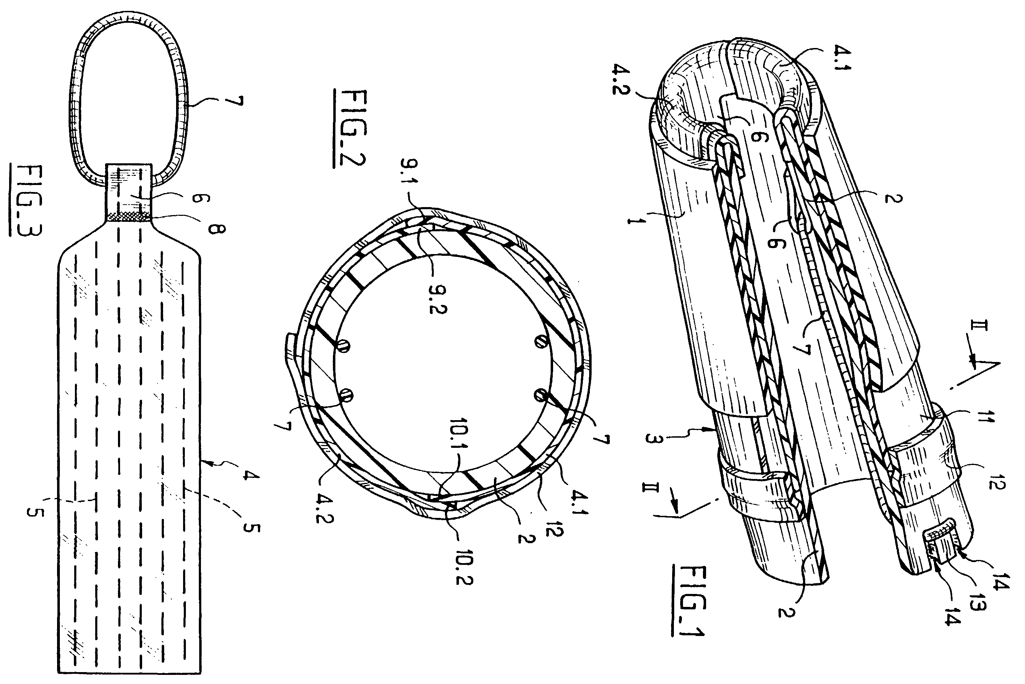

En référence à la figure 3, les bandes 4 sont armées de fibres de renfort 5 représentées en pointillé épais sur la figure 3, par exemple des fibres de verre, s'étendant selon une direction longitudinale de la bande 4. A l'une de ses extrémités, la bande 4 comporte une patte 6 repliée à l'intérieur d'une boucle élastique 7 et fixée sur elle-même, par exemple par un thermosoudage selon une zone 8. De préférence, au moins une fibre de renfort 5 s'étend également dans la patte de fixation 6. Les bandes 4 sont disposées sur la surface externe de l'organe tubulaire rigide 2 pour s'étendre selon la direction longitudinale de celui-ci. Les bandes 4.1 et 4.2 se chevauchent de façon alternée, c'est-à-dire que l'un des bord longitudinaux 9.1 de la bande 4.1 chevauche le bord longitudinal correspondant 9.2 de la bande 4.2 tandis que l'autre bord longitudinal 10.1 de la bande 4.1 est chevauché par le bord longitudinal correspondant 10.2 de la bande 4.2 (voir figure 2).

Les bandes 4.1 et 4.2 sont repliées à l'extrémité de petit diamètre de l'organe tubulaire rigide 2 de sorte que les pattes de fixation et les boucles élastiques 7 s'étendent à l'intérieur de l'organe tubulaire 2. L'extrémité 11 du film souple 3 extérieure à l'organe tubulaire rigide 2 est fixée sur celui-ci par un ruban adhésif 12.

Les boucles élastiques 7 sont mises en tension et accrochées sur des doigts d'accrochage 13 solidaires de l'organe tubulaire rigide 2. Dans le mode de réalisation particulier illustré, les doigts d'accrochage 13 sont réalisées en prévoyant à l'extrémité de grand diamètre de l'organe tubulaire 2 deux fentes parallèles 14 qui délimitent un doigt d'accrochage 13.

Lors de l'utilisation, le dispositif support équipé d'un manchon élastique en position expansée est engagé sur une extrémité de câble ou sur l'un des câbles préalablement à la réalisation d'une jonction de câble. Pour effectuer la pose du manchon élastique 1, le ruban adhésif 12 est retiré, libérant ainsi l'extrémité 11 du film souple 3 et permettant son coulissement sur l'organe tubulaire rigide 2. Une légère traction est alors exercée sur le tube rigide 2 pour vaincre les forces d'adhérence résultant de la pression exercée par le manchon élastique 1 sur le film souple 3. Après déclenchement du mouvement de retrait de l'organe tubulaire rigide 2, les boucles élastiques 7 assurent une force de traction suffisante pour tirer le film souple 4 et assurer par réaction le coulissement de l'organe tubulaire rigide 2 par rapport au manchon élastique 1. Ce mouvement de retrait est accentué par la forme conique de l'organe tubulaire rigide 2.

Bien entendu l'invention n'est pas limitée au mode de réalisation décrit et on peut y apporter des variantes de réalisation sans sortir du cadre de l'invention tel que défini par les revendications.

En particulier, bien que l'organe élastique ait été illustré sous forme de boucles élastiques 7 fixées à une extrémité des bandes 4 par une patte de fixation 6 repliée sur elle-même, et au tube rigide 2 par des doigts d'accrochage 13, on peut prévoir des organes élastiques sous forme de bandes fixées à l'extrémité correspondante de la bande de film souple par un rivet, et équipées à l'autre extrémité d'un crochet pouvant s'engager sur l'extrémité de grand diamètre de l'organe tubulaire 2.

De même, bien que la fixation des pattes 6 sur elles-mêmes ait été décrite sous forme d'un thermosoudage, on peut réaliser cette fixation par rivetage ou par collage.

Bien que le film souple 3 ait été illustré comme constitué de deux bandes se chevauchant, on peut réaliser le film souple 3 sous une forme tubulaire ou au contraire prévoir un nombre de bandes associées plus important.

Bien que le dispositif selon l'invention ait été représenté sous une forme de stockage dans laquelle les boucles élastiques 7 sont sous tension, on peut prévoir de laisser les boucles élastiques décrochées pendant le stockage et de n'accrocher celles-ci sur les doigts d'accrochage 13 qu'au moment de la pose du manchon élastique 1. Dans ce cas l'extrémité 11 du film souple 3 n'est pas nécessairement fixée à l'organe tubulaire 2.

Dans le cas d'une jonction pour laquelle le manchon élastique 1 a une longueur plus importante que pour une extrémité de câble, on peut prévoir de monter le manchon élastique 1 sur deux dispositifs selon l'invention mis bout à bout avec les extrémités de petit diamètre des organes tubulaires rigides disposées en regard l'une de l'autre. On peut également réaliser le dispositif support selon l'invention avec des organes tubulaires cylindriques.

Bien que l'invention ait été décrite en relation avec un mode de réalisation dans lequel les doigts d'accrochage 13 sont délimités par des fentes 14, on peut réaliser des doigts d'accrochage sous forme d'ergots ou de crochets s'étendant en saillie à l'intérieur de l'organe tubulaire.

## Revendications

1. Dispositif support pour un manchon élastique (1), le dispositif support comportant un organe tubulaire rigide (2) recouvert d'un film souple (3) à faible coefficient de frottement ayant une première extrémité (11) s'étendant à l'extérieur de l'organe tubulaire et une seconde extrémité (6) s'étendant à l'intérieur de l'organe tubulaire et étant reliée à un organe d'entraînement, **caractérisé en ce que** l'organe d'entraînement comporte au moins un organe élastique (7) fixé à la seconde extrémité (6) du film souple et à l'organe tubulaire en un point de celui-ci assurant une mise en tension de l'organe élastique.

2. Dispositif support selon la revendication 1, **caractérisé en ce que** la première extrémité (11) du film souple (3) est fixée de façon provisoire par rapport à l'organe tubulaire (2).

3. Dispositif support selon la revendication 1, **caractérisé en ce que** l'organe d'entraînement comporte au moins une boucle élastique (7) fixée à la seconde extrémité (6) du film souple (3).

4. Dispositif support selon la revendication 3, **caractérisé en ce que** le film souple comporte une patte (6) repliée à l'intérieur de la boucle élastique (7) et fixée sur elle-même.

5. Dispositif support selon la revendication 1, **caractérisé en ce que** le film souple (3) comporte au moins deux bandes (4.1, 4.2) se chevauchant.

6. Dispositif support selon la revendication 5, **caractérisé en ce que** chaque bande comporte un premier bord longitudinal (9.1) chevauchant un bord longitudinal correspondant (9.2) d'une bande adjacente et un deuxième bord longitudinal (10.1) chevauché par l'autre bord longitudinal correspondant (10.2) de la bande adjacente.

7. Dispositif support selon la revendication 3, **caractérisé en ce que** l'organe tubulaire (2) comporte un doigt d'accrochage (13) disposé pour recevoir la boucle élastique (7).

8. Dispositif support selon la revendication 7, **caractérisé en ce que** le doigt d'accrochage (13) est délimité par des fentes (14) dans une extrémité de l'organe tubulaire (2).

9. Dispositif support selon la revendication 1, **caractérisé en ce que** le film souple est armé de fibres de renfort (5) s'étendant selon une direction longitudinale de l'organe tubulaire.

10. Dispositif support selon la revendication 9 et la revendication 4, **caractérisé en ce qu'**au moins une fibre de renfort s'étend dans la patte de fixation (6).

## Claims

1. A support device for an elastic sleeve (1), the support device comprising a rigid tubular member (2) covered in a flexible film (3) having a low coefficient of friction with a first end (11) extending outside the tubular member and a second end (6) extending inside the tubular member and connected to a drive member, the support device being **characterized in that** the drive member comprises at least one elastic member (7) fixed to the second end (6) of the flexible film and to the tubular member at a point thereof that enables the elastic member to be put under tension.

2. A support device according to claim 1, **characterized in that** the first end (11) of the flexible film (3) is fixed to the tubular member (2) in temporary manner.

3. A support device according to claim 1, **characterized in that** the drive member comprises at least one elastic band (7) fixed to the second end (6) of the flexible film (3).

4. A support device according to claim 3, **characterized in that** the flexible film has a tab (6) folded through the elastic band (7) and fixed onto itself.

5. A support device according to claim 1, **characterized in that** the flexible film (3) comprises at least two overlapping strips (4.1, 4.2).

6. A support device according to claim 5, **characterized in that** each strip has a first longitudinal edge (9.1) overlapping a corresponding longitudinal edge (9.2) of an adjacent strip, and a second longitudinal edge (10.1) overlapped by the corresponding other longitudinal edge (10.2) of the adjacent strip.

7. A support device according to claim 3, **characterized in that** the tubular member (2) has a hooking finger (13) disposed to receive the elastic band (7).

8. A support device according to claim 7, **characterized in that** the hooking finger (13) is defined by slots (14) in one end of the tubular member (2).

9. A support device according to claim 1, **characterized in that** the flexible film is reinforced with reinforcing fibers (5) extending in a longitudinal direction of the tubular member.

10. A support device according to claim 9 and claim 4, **characterized in that** at least one reinforcing fiber extends in the fixing tab (6).

## Patentansprüche

1. Vorrichtung zum Tragen einer elastischen Muffe (1), umfassend ein starres rohrförmiges Organ (2), das mit einem einen niedrigen Reibungskoeffizienten aufweisenden flexiblen Film (3) überzogen ist, der ein erstes Ende (11) hat, das sich außerhalb des rohrförmigen Organs erstreckt, sowie ein zweites Ende (6), das sich innerhalb des rohrförmigen Organs erstreckt und mit einem Mitnahmeelement verbunden ist, **dadurch gekennzeichnet, daß** das Mitnahmeelement mindestens ein elastisches Element (7) umfaßt, das an dem zweiten Ende (6) des flexiblen Films und an dem rohrförmigen Organ an einem Punkt desselben befestigt ist, der ein Spannen des elastischen Elements gewährleistet.

2. Vorrichtung zum Tragen nach Anspruch 1, **dadurch gekennzeichnet, daß** das erste Ende (11) des flexiblen Films (3) in bezug auf das rohrförmige Organ (2) auf provisorische Weise befestigt ist.

3. Vorrichtung zum Tragen nach Anspruch 1, **dadurch gekennzeichnet, daß** das Mitnahmeelement mindestens eine elastische Schlaufe (7) enthält, die an dem zweiten Ende (6) des flexiblen Films (3) befestigt ist.

4. Vorrichtung zum Tragen nach Anspruch 3, **dadurch gekennzeichnet, daß** der flexible Film eine Lasche (6) hat, die innerhalb der elastischen Schlaufe (7) umgeschlagen und auf sich selbst befestigt ist.

5. Vorrichtung zum Tragen nach Anspruch 1, **dadurch gekennzeichnet, daß** der flexible Film (3) mindestens zwei sich überlappende Streifen (4.1, 4.2) hat.

6. Vorrichtung zum Tragen nach Anspruch 5, **dadurch gekennzeichnet, daß** jeder Streifen einen ersten Längsrand (9.1) hat, der einen entsprechenden Längsrand (9.2) eines angrenzenden Streifens überlappt, sowie einen zweiten Längsrand (10.1), der von dem anderen entsprechenden Längsrand (10.2) des angrenzenden Streifens überlappt wird.

7. Vorrichtung zum Tragen nach Anspruch 3, **dadurch gekennzeichnet, daß** das rohrförmige Organ (2) einen Einhängefinger (13) hat, der derart angeordnet ist, daß er die elastische Schlaufe (7) aufnimmt.

8. Vorrichtung zum Tragen nach Anspruch 7, **dadurch gekennzeichnet, daß** der Einhängefinger (13) von in einem Ende des rohrförmigen Organs (2) ausgebildeten Schlitzen (14) begrenzt wird.

9. Vorrichtung zum Tragen nach Anspruch 1, **dadurch gekennzeichnet, daß** der flexible Film mit Verstärkungsfasern (5) verstärkt ist, die sich entlang einer Längsrichtung des rohrförmigen Organs erstrecken.

10. Vorrichtung zum Tragen nach Anspruch 9 und Anspruch 4, **dadurch gekennzeichnet, daß** sich mindestens eine Verstärkungsfaser in der Befestigungslasche (6) erstreckt.
